Europäisches Patentamt

European Patent Office

Office européen des brevets

(19)

(11) Publication number: **0 265 840 B1**

(12) **EUROPEAN PATENT SPECIFICATION**

(45) Date of publication of patent specification: **29.07.92**   (51) Int. Cl.5: **G21C 13/02**, F16L 23/00

(21) Application number: **87115483.7**

(22) Date of filing: **22.10.87**

(54) Intrumentation port interface assembly.

(30) Priority: **30.10.86 US 925863**
**05.06.87 US 58952**

(43) Date of publication of application:
**04.05.88 Bulletin 88/18**

(45) Publication of the grant of the patent:
**29.07.92 Bulletin 92/31**

(84) Designated Contracting States:
**BE DE ES FR GB IT SE**

(56) References cited:
**EP-A- 0 164 524**
**FR-A- 1 174 474**
**FR-A- 2 223 620**
**GB-A- 2 170 562**

(73) Proprietor: **WESTINGHOUSE ELECTRIC COR-PORATION**
**Westinghouse Building Gateway Center**
**Pittsburgh Pennsylvania 15222(US)**

(72) Inventor: **Stapleton, Cecil Royce**
**Box 1313**
**Pensacola Florida 32596(US)**

(74) Representative: **Patentanwälte Dipl.-Ing. R. Holzer Dipl.-Ing. (FH) W. Gallo**
**Ludwigstrasse 26**
**W-8900 Augsburg(DE)**

EP 0 265 840 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates generally to nuclear reactors and, more particularly, to an instrumentation port interface assembly for use therefor.

The design and quality standards for nuclear reactor equipment are extremely high and stringent. Hence, tasks which in non-nuclear applications can be achieved in a straightforward manner more often than not are demanding and difficult to perform in a nuclear environment imposing harsh working conditions, such as limited space, poor accessibility of work areas to be served, a need for workers to wear bulky protective clothing and to use breathing apparatus, and time pressure due to the requirement to keep workers from exceeding maximum radiation dose exposure limits.

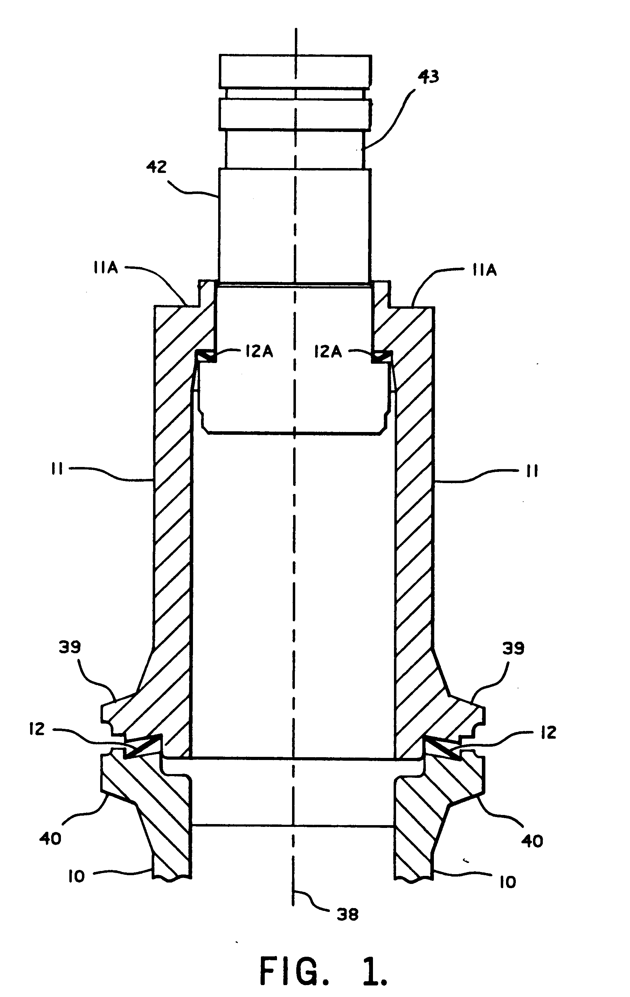

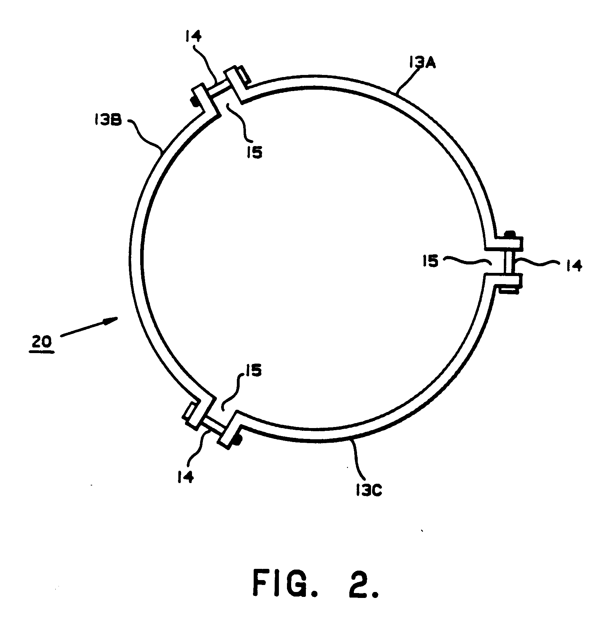

The invention deals primarily with an instrumentation port interface assembly of the kind typically employed in nuclear power plants for the purpose of forming a pressure-tight joint with a thermocouple column extending through a penetration in the upper vessel head of a reactor and forming part of an instrumentation system for monitoring the operating temperature of coolant exiting the fuel assemblies in the reactor core. Typically, instrumentation port interface assemblies heretofore used are of the kind illustrated in Figs. 1 and 2 of the accompanying drawings and, as shown therein, comprise a lower conduit or tubular flange 10, an upper conduit or tubular flange 11, and a conduit seal 42 for thermocouples (not shown) to sealingly extend therethrough. Usually, the tubular lower flange 10 is threaded onto and welded to a vessel-head penetration (not shown), the lower and upper tubular flanges 10 and 11 are sealingly joined end-to-end, and the conduit seal 42 which has a lower end portion thereof inserted into the upper tubular flange 11 is sealingly coupled to the flange 11. Sealing pressure at the interfaces between the tubular flanges and between the upper flange and the conduit seal is applied by holding the tubular flanges 10 and 11 axially in compression with respect to each other so as to apply sealing pressure to the gasket 12 therebetween, and by holding the tubular flange 11 and the conduit seal 42 axially in tension with respect to each other so as to apply sealing pressure to the gasket 12A at the interface therebetween. The conventional method of accomplishing this involves initially squeezing the two tubular flanges 10 and 11, with the gasket 12 disposed therebetween, axially together by means of a special loading device (not shown) and, while maintaining the axial preload thus applied, clamping the flanges securely together by means of a clamping device such as shown in Fig. 2, whereafter the loading device is removed. As seen from Fig. 2, the conventional clamping device 20 used for this purpose consists of three essentially identical, arcuate segments 13A, 13B and 13C which have flanged end portions and are secured together by means of bolts 14 each extending freely through an opening formed in the respective flanged end portion of one arcuate segment and threadedly engaged in an opening formed in the adjacent flanged end portion of the adjoining segment. This conventional clamping device 20 is brought to the assembly site in disassembled form and requires at least two workers to mount it in place and bolt it together. It is a tedious task, especially since the bolts 14 must be torqued carefully in order to maintain substantially equal gaps 15 between the flanged end portions of the clamp segments for uniform pressure application, and to prevent overcompression of the gasket 12 between the interfaced tubular flanges 10 and 11. Considering the size and weight not only of the clamping device 20 but also of the axial loading device temporarily needed to axially preload the tubular flanges to be joined, and considering further the rather cramped conditions under which such assembly operation must be performed as well as the safety measures to be taken in performing it, it will be appreciated that forming the sealed joint in this manner is indeed a time-consuming and demanding task.

The prior practice of joining the conduit seal 42 to the upper tubular flange 11 involves the use of a jack screw arrangement (not shown) comprising a split ring seated in a circumferential groove 43 formed in the outer periphery of the conduit seal 42, a jacking plate retained by the split ring, and six jacking screws each threadedly engaged in one of a generally circular array of openings formed in the jacking plate in spaced relationship with respect to one another. The jacking screws coact with a shoulder 11A on the tubular flange 11 so as, when torqued, to place the conduit seal 42 and the tubular flange 11 axially in tension with respect to each other and thereby apply sealing pressure to the gasket 12A at the interface therebetween. Again, forming the upper joint in this conventional manner is a slow and cumbersome process, especially inasmuch as the several jacking screws must be successively and repeatedly torqued incrementally in order to avoid objectionable cocking of the conduit seal 42 and not to impair the effectiveness of the seal. The jack screw arrangement will remain in position as part of the conventional instrumentation port interface assembly since it is needed therein to maintain the sealed joint between the upper tubular flange and the conduit seal; therefore, a lock wire is installed for securing the jacking screws against accidental loosening thereof during use.

A largely similar prior art assembly is disclosed in EP-A-0 164 524.

It is the principal object of the invention to provide an improved instrumentation port interface assembly, one which is easier, quicker and safer to install and to remove.

The invention accordingly resides in an instrumentation port interface assembly as defined in claim 1.

A clamping device composed of arcuate and pivotally linked clamping segments is known per se from FR-A-2 223 620.

The connecting means of the first clamping device may be a cap screw freely extending through an opening formed through an end portion of one of the arcuate segments having the non-linked ends, and threadedly engaged in an opening formed in an end portion of the other arcuate segment having one of the non-linked ends. Alternatively and preferably, the connecting means of the first clamping device and also the connecting means of the second clamping device may each comprise a bolt which is pivotally connected to one of the two arcuate segments having the non-linked ends, and is movable into and from a recess formed in an end portion adjacent the non-linked end of the other of said two arcuate segments, the bolt having disposed thereon and threadedly engaged therewith a nut which acts upon said end portion of the arcuate segment having said recess formed therein.

The arcuate segments with the non-linked ends may have datum surfaces formed thereon adjacent the respective non-linked ends and cooperable with each other so as to limit the maximum decrease in said effective diameter achievable through adjustment of the connecting means, and thereby to limit the maximum radial inward pressure exertable by the respective clamping device.

Each of the arcuate segments of at least the first clamping device has radially out-turned portions adjacent the opposite ends thereof, said arcuate segments being pivotally linked together by means of links extending between and pivotally connected to the out-turned portions of the respective arcuate segments.

The bearing surfaces on the arcuate segments of the first clamping device are inclined relative to each other so as to define therebetween a space shaped in cross-section substantially as an isosceles trapezoid, said tubular flanges having formed thereon, adjacent the interfaced ends thereof, generally frusto-conical bevels which define said complementary bearing surfaces adapted to coact with the bearing surfaces of the arcuate segments.

With the conduit seal partially inserted into said one tubular flange and defining a sealed interface with the latter therewith, the arcuate segments of the second clamping device extend partially between the force transmitting means and the complementary bearing surface on said one tubular flange, and they are shaped such as to produce a wedging action placing the conduit seal and said one tubular flange axially in tension with respect to each other, thereby producing sealing pressure at said interface.

The force transmitting means comprising an annular member extending around the conduit seal and being affixed thereto. The annular member has a flange portion which extends radially inward and is engaged in a groove formed in the conduit seal circumferentially in the outer periphery thereof. Preferably, the annular member is a third clamping device composed of at least two arcuate segments are pivotally linked together except at two non-linked ends where the arcuate segments are separably joined by suitable connecting means.

Preferably, each of the first and second clamping devices is composed of four said arcuate segments each having a span of less than 90°.

Preferred embodiments of the invention will now be described, by way of example only, with reference to the accompanying drawings, in which:-

Figure 1 is a schematic partial view of the conventional instrument port interface assembly described above;

Fig. 2 is a plan view of the conventional clamping device employed with the assembly of Fig. 1;

Fig. 3 is a plan view of one form of clamping device for use in conjunction with the instrumentation port interface assembly according to the invention;

Fig. 4 is a cross-sectional view taken along line 4-4 in Fig. 3;

Fig. 5 is a cross-sectional view of the instrument port interface assembly embodying the invention;

Fig. 6a is a top plan view of a preferred lower clamping device for use with the instrument port interface assembly shown in Fig. 5;

Fig. 6b is a cross-sectional view taken along line 6b-6b in Fig. 6a;

Fig. 7a is a top plan view of a preferred upper clamping device for use with the instrument port interface assembly shown in Fig. 5; and

Fig. 7b is a cross-sectional view taken along line 7b-7b in Fig. 7a.

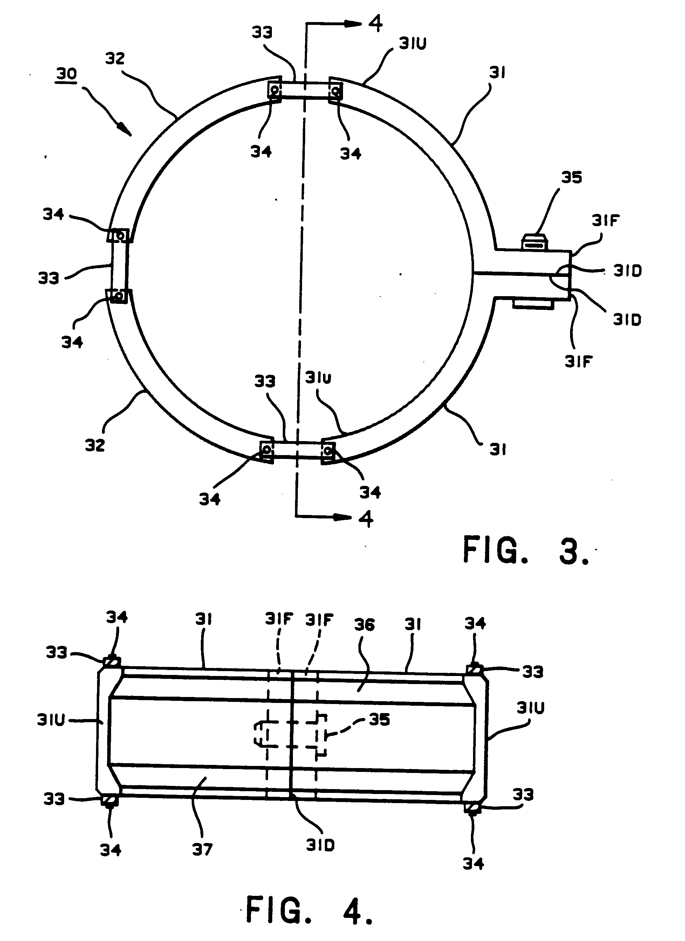

Referring now to the drawings and, in particular, to Figs. 3 and 4 thereof, the clamping device illustrated therein and generally designated with numeral 30 is of articulated construction. It comprises two arcuate segments 31 each having an unflanged end portion 31U and a flanged end portion 31F, the flanged end portions 31F being joined by means of a removable cap screw 35 which extends freely through an opening in one of the flanged end portions 31F and is threadedly engaged in an opening in the other flanged end portion 31F. The unflanged end portions 31U of the end segments 31 are pivotally interlinked in a manner enabling the whole clamping device 30 to be opened jaw-like for ease of application and subsequent removal thereof, and permitting the spacing between the flanged end portions 31F to be varied. As illustrated, the means for interlinking the two end segments 31 are two arcuate intermediate segments 32 and links 33 which pivotally connect the intermediate segments 32 respectively to each other and to the unflanged end portions 31U of the end segments 31. As seen best from Fig. 4, each link 33 comprises a pair of parallel spaced link plates which are pivotally supported on bosses 34 extending from the respective end portions of the arcuate segments 31 or 32 and are retained thereon the bosses by suitable means, such as cotter pins (not shown) or the like.

It will be appreciated that instead of utilizing two intermediate segments 32 between the end segments 31, as shown, it may be desirable to use more than two and, in some applications, may be possible to use only one or even to extend the arcuate span of the end segments 31 and to interlink them directly.

The articulated clamping device 30 shown in Figs. 3 and 4 may be applied to an instrument port interface assembly, such as the one shown in Fig. 1, by initially removing the cap screw 35, then parting the flanged end portions 31F of the end segments 31 wide enough for the clamping device to be placed around the tubular flanges 10 and 11, and finally re-inserting the cap screw 35 so as to rejoin the flanged end portions 31F of the end segments 31.

As seen from Fig. 3, the clamping device 30 is generally ring-shaped and fits around frustoconical end portions or bevels 39 and 40 formed on the tubular flanges 10 and 11 at the interface thereof. As seen from Fig. 4, each arcuate segment 31 or 32 of the articulated clamp 30 has on the inside thereof two axially spaced inclined bearing surfaces 36 and 37 adapted to coact with complementary bearing surfaces on the bevels 39 and 40, in a manner such that torquing of the cap screw 35 to reduce the effective, i.e. inner, diameter of the clamping device will cause the tubular flanges to be forced axially toward and into sealing engagement with one another. If the gasket at the interface between the tubular flanges is of a type which is susceptible of overcompression, the flanged end portions 31F of the end segments 31 preferably are provided with datum surfaces 31D for limiting the maximum clamp contraction and, hence, the maximum sealing pressure possibly to be achieved through torquing of the cap screw 53. In the embodiment shown, the datum surfaces simply are the flat surface portions 31D of the flanged end portions 31F of the end segments 31; however, it will be appreciated that other configurations of datum surfaces could be used, including datum surfaces having mating portions for ensuring accurate alignment of the flanged end portions 31F, when drawn together, with respect to each other.

Comparing Figs. 2 and 3, it will be seen that whilst the conventional clamping device 20 of Fig. 2 employs three arcuate segments 13, the clamping device 30 (Fig. 3) utilizes four segments 31 and 32 each having a substantially shorter span of less than 90°. It has been found that increasing the number of arcuate segments utilized and reducing the span per segment will result in a larger contact area between the clamping device and the interfaced end portions of the two tubular flanges 10 and 11 which, in turn, aids in the proper seating of the gasket 12 as the clamping device 30 is being clamped into place. It will be appreciated that use of this clamping device 30 eliminates the need for an axial loading device, such as previously required, and greatly simplifies the assembly procedure.

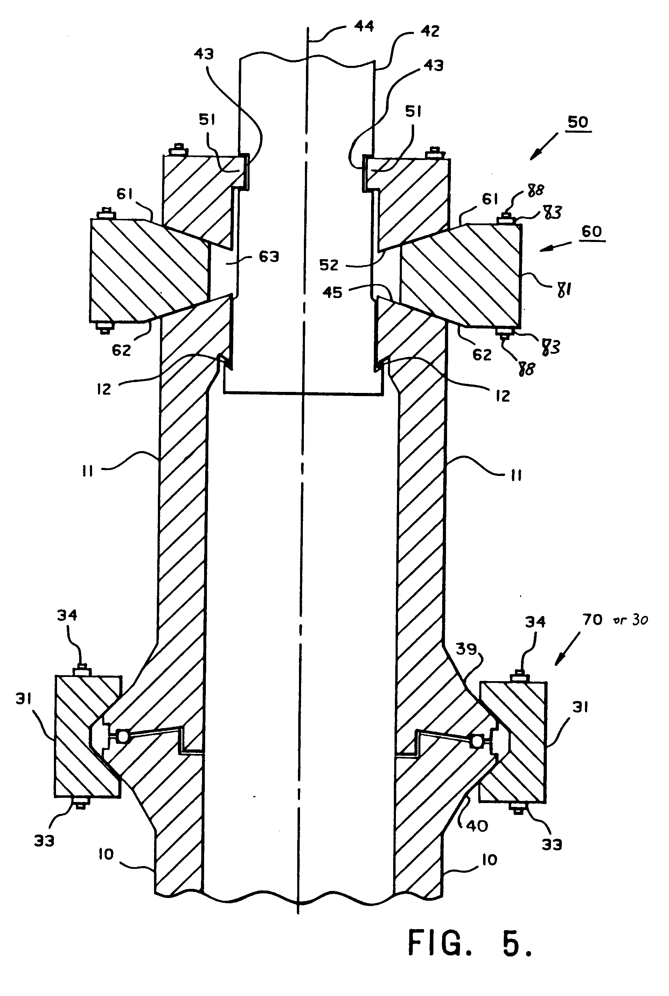

Referring now to Figs. 5 to 7b, the instrumentation port interface assembly illustrated therein, and which represents the currently preferred embodiment of the invention, includes an upper tubular flange 11 having an upper end portion different from that of the upper flange 11 shown in Fig. 1. The gasket 12 is seated between a downwardly facing inner ledge or surface provided on the upper end portion of the upper flange 11 and an upwardly facing ledge or surface provided on a lower end portion of the conduit seal that is inserted into the upper flange 11; therefore, an axially (with respect to axis 44) applied force placing the flange 11 and conduit seal 42 in tension with respect to each other is required in order to establish and maintain a proper seal at the interface between the flange 11 and the conduit seal 42. In the preferred embodiment as illustrated, such force is applied by exerting upward pressure on the conduit seal 42, and the means for accomplishing this comprise (a) a bearing clamp or positioner 50 affixed to the conduit seal 42 and bevelled at its lower end to present a generally frusto-conical downwardly facing bearing surface 52, (b) a generally frusto-conical upwardly facing bearing surface 45 on the upper end of the tubular flange 11, and (c) an articulated wedging clamp clamp 60 which coacts with the two oppositely inclined frusto-conical bearing surfaces 52 and 45 so as to urge them apart and thereby provide sealing pressure at the gasket 12.

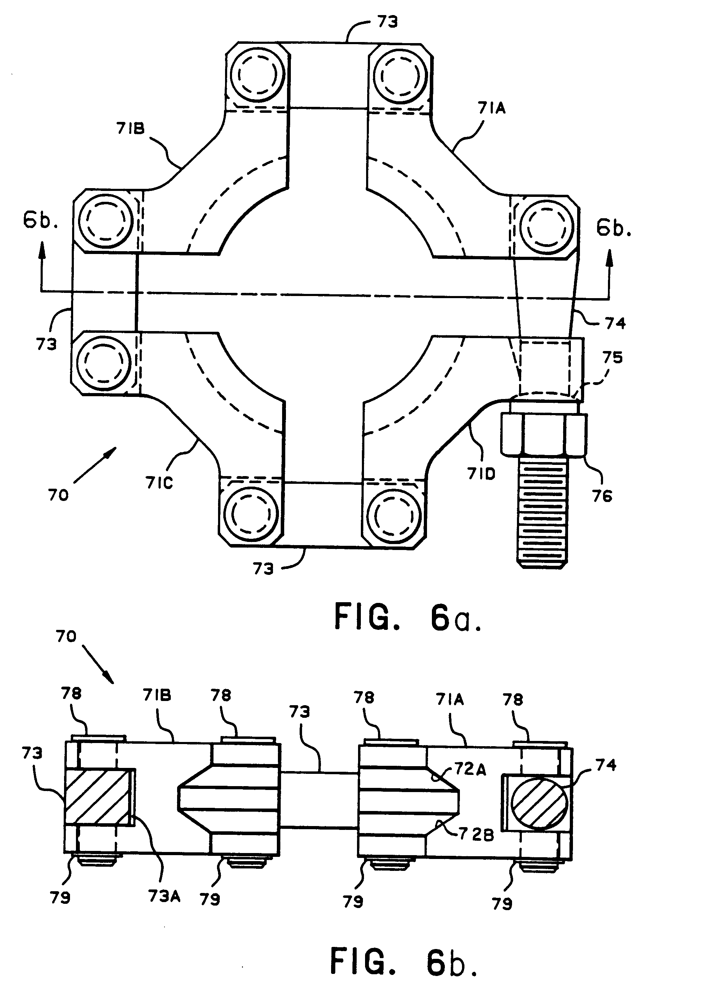

Figure 5 shows the two gaskets at the upper and lower joints as plain ring-type gaskets of circular cross-section, and shows the lower and upper tubular flanges 10 and 11 as joined by means of the articulated clamping device 30 described hereinbefore with reference to Figs. 3 and 4. It may be preferred, however, rather to employ hollow gaskets known in the art as conical frustrum gaskets, such as indicated in Fig. 1, in which case the preferred kind of clamping device to be used in interfacing the flanges 10 and 11 may be the clamping device 70 illustrated in Figs. 6a-b and to be described in detail hereinbelow.

Referring again to Fig. 5, the conduit seal 42 is of conventional design and, as such, has an annular groove 43 formed circumferentially in the outer periphery thereof. As set forth previously herein, conventional assemblies utilize such groove for the purpose of affixing to the conduit seal a jack screw device (not shown) needed to interface the conduit seal with the upper tubular flange and to produce the necessary sealing pressure therebetween. In the preferred embodiment shown in Fig. 5, the groove 43 is employed as a means for affixing the positioner 50 to the conduit seal 42. The positioner 50 may be of any suitable construction but in the preferred embodiment is in the form of a positioner or bearing clamp comprising two flanged arcuate members bolted together, adjacent the flanged ends thereof, by means of bolt-and-nut assemblies. The positioner clamp 50 has a flange portion 51 which extends radially inward and is engaged in the groove 43 so as to retain the positioner clamp 50 against axial displacement thereof relative to the conduit seal 42. The downwardly facing bearing surface 52 of the positioner clamp 50 and the upwardly facing bearing surface 45 of the upper tubular flange 11, being oppositely inclined relative to each other with respect to the longitudinal axis 44 of the flanges 10,11 and the conduit seal 42, define therebetween an annular space 63 having a cross-section generally in the form of an isosceles trapezoid which has its parallel sides in parallel with the longitudinal axis 44 and has its non-parallel sides converging toward each other in the direction toward the axis 44. This annular space 63 thus defined is adapted to receive a wedge-like inner peripheral portion of the articulated clamping device 60 which has substantially the same cross-sectional configuration as the annular space 63, defining two bearing surfaces 61,62 which converge with respect to each other in the direction toward the center of the clamping device 60, and which coact with the frusto-conical bearing surfaces 45 and 52 of upper tubular flange 11 and the conduit seal 42, respectively, so as to translate radial clamping pressure exerted by the clamping device 60 into an axially directed force tending to separate the tubular flange and the conduit and thereby applying sealing pressure at the interface including the gasket 12.

It will be appreciated that various modifications are possible with regard to the clamping arrangement for the upper joint of the instrumentation port interface assembly. For instance, instead of employing a conduit seal having an annular groove, such as groove 43 formed therein, it would be possible to use a conduit seal similar to the conduit seal 42 but having formed thereon a shoulder defining a downwardly facing frusto-conical bearing surface functionally equivalent to the bearing surface 52 on the positioner 50, in which case the latter would be redundant. It would also be possible to design the functions of the positioner 50 and of the wedge clamp 60 both into a single clamping device similar to the wedge clamp 60 but having positioner for affixing the clamping device to the conduit seal formed integral therewith. Of course, it will also be understood that even though two pairs of bearing surfaces 52,61 and 45,62 are shown as coacting with one another in the preferred embodiment of Fig. 5, one such pair of inclined bearing surfaces 52,61 or 45,62 may suffice, with the other pair of coacting bearing surfaces then disposed in a plane perpendicular to the longitudinal axis 44 of the instrumentation port interface assembly.

Referring now in particular to Figs. 6a and 6b which show a preferred construction of the lower clamping device 70, the latter is similar to the previously described clamping device 30 (Figs. 3 and 4) in that it is articulated and comprises two arcuate end segments 71A and 71D and two arcuate intermediate segments 71B and 71C which are pivotally interconnected by means of links 73. As distinct from the clamping device 30 of Figs. 3 and 4, the clamping device 70 employs arcuate segments 71A-D which have end portions thereof turned radially outward, and links 73 each of which consists, not of two link plates as in the embodiment of Figs. 3-4, but of only one which extends into recesses 73A in the out-turned end portions of the respective segments 71 and is pivotally connected to said out-turned end portions by means of pins 78 suitably held in place, e.g. by means of retaining washers 79. The end segments 71A and 71D are separably joined at their non-linked ends, i.e. their ends not connected to the intermediate segments 71B and 71C, by means of a clamping bolt or eyebolt 74 which is pivotally connected to the end segment 71A in a similar manner as described above with respect to the links 73, and is pivotally movable into and out of a recess formed in the non-linked end portion of the end segment 71D. The recess includes a dished cut-out 75 adapted to mate with a spherical protuberance on a nut 76 threadedly disposed on a threaded end portion of the eyebolt 74. By sufficiently loosening the nut 76, the bolt 74 can be swung into and out of the recess formed in the end segment 71D. When the bolt 74 is engaged in this recess, tightening of the nut 76 will cause the non-linked ends of the two end segments 71A and 71D to be drawn together and thereby, if the clamping device 70 is installed on the tubular flanges 10, 11 and is embracing the interfaced end portions thereof, to exert on the latter radial clamping pressure. Referring in this context particularly to Fig. 6b, it will be seen therefrom that each of the arcuate segments 71 A-D has formed therein, along the inner periphery thereof, a recess of generally trapezoidal cross-section which provides bearing surfaces 72a and 72b adapted to coact with the frusto-conical bearing surfaces 39 and 40 of the interfaced end portions of the tubular flanges 10, 11 in a manner such as to translate the above-mentioned radial clamping pressure into oppositely directed axial forces urging the tubular flanges against each other and thereby producing seating and sealing pressure at their interface. This sealing pressure can be selectively varied and precisely adjusted, according to need, through corresponding adjustment of the nut 76 on the bolt 74.

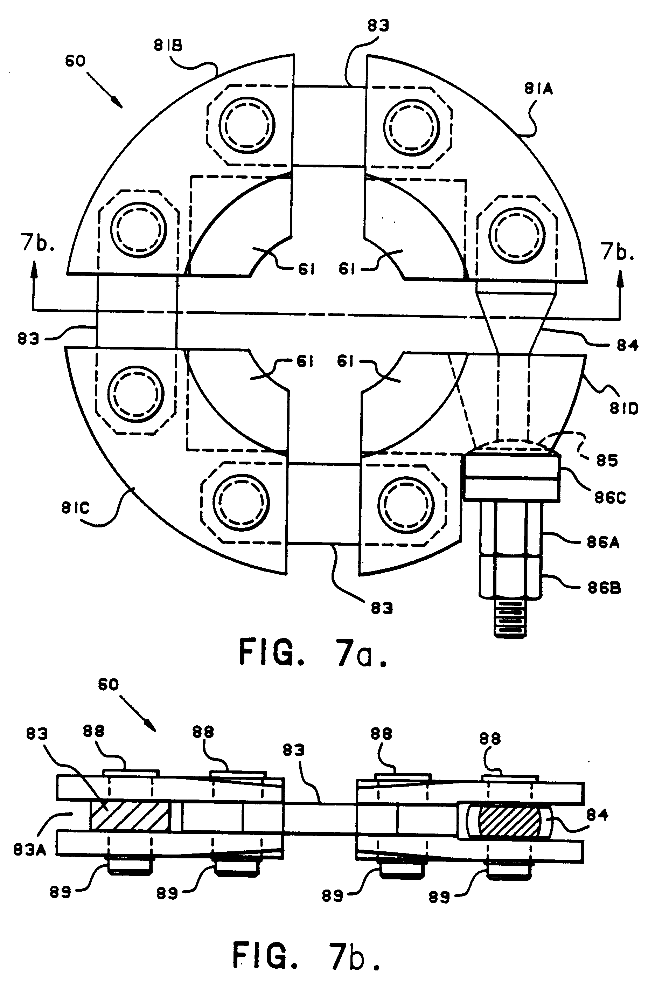

Referring now to Figs. 7a and 7b which show the preferred construction of the upper clamping device or wedge clamp 60, a comparison thereof with Figs. 6a and 6b will show that this wedge clamp 60 is similar to the lower clamping device 70 in that it, too, is of articulated construction and composed of arcuate end segments 81A and 81D, arcuate intermediate segments 81B and 81C, links 83 pivotally connecting the end segments to the respective intermediate segments and pivotally connecting the intermediate segments to each other, and a bolt-and-nut assembly 84, 86 for separably joining the non-linked end portions of the end segments 81A and 81D and applying thereto a clamping force. More specifically, the links 83 have opposite end portions thereof disposed in recesses 83A defined in the respective arcuate segments 81, and they are pivotally connected to the latter in a similar manner as described hereinbefore in connection with the links 73 of the clamping device 70, namely, by means of pins 88 which extend through openings in the respective links and body members and are held in place by means of retaining washers 89 or the like. The segments 81 differ from those shown in Fig. 6a in that they have no radially out-turned end portions but are generally quarter-pie-shaped, and in that each has an inner portion which defines wedge-like bearing surfaces 61 and 62 (see also Fig. 5). The bolt-and-nut assembly 84, 86 comprises a clamping bolt or eyebolt 84 which is pivotally connected to the end segment 81A by means of a pin 88 and in a manner such as to be pivotally movable into and out of a recess extending into the end segment 81D from the non-linked end thereof and having a dished cut-out 85. The clamping bolt-and-nut assembly includes further a washer 86C with a generally spherical protuberance shaped to mate with the dished cut-out 85, an adjustable clamp nut 86A adjacent the washer 86C, and lock nut 86B adjacent the clamp nut 86A. It will be appreciated that a nut with a spherical protuberance thereon, such as employed with the clamping device 70 of Figs. 6a-b, could be substituted for the nut-and-washer combination of Figs 7a-b. The purpose and the functioning of the bolt-and-nut assembly 85, 86 are essentially the same as described above in conjunction with the bolt-and-nut assembly 74, 76 shown in Figs. 6a-b.

## Claims

1. An instrumentation port interface assembly comprising a pair of tubular flanges (10, 11) each interfaced at one end thereof with the other so as to form a sealed joint therebetween, a generally ring-shaped first clamping device (30 or 70) for separably securing the tubular flanges together and maintaining sealing pressure therebetween, said first clamping device having bearing surfaces inclined relative to each other which coact with complementary inclined bearing surfaces (39, 40) on the respective tubular flanges (10, 11) so as to translate radial inward pressure applied by said first clamping device into axial clamping and sealing forces applied to the tubular flanges, an instrumentation conduit seal (42) having an end portion thereof inserted into one (11) of said tubular flanges at the opposite end thereof and forming a sealed joint therebetween, said conduit seal having on the inserted end portion a lateral seating surface facing an undercut lateral seating surface formed on said one tubular flange interiorly thereof with a gasket (12) interposed therebetween, and coupling means (50, 60) for separably joining the conduit seal and said one tubular flange and for maintaining sealing pressure therebetween, characterized in that -

 (a) said first clamping device (30 or 70) is an articulated clamp composed of arcuate segments (31, 32; or 71) provided with said bearing surfaces (36, 37 or 72A, 72B) and pivotally linked together at adjacent ends thereof except at two, and connecting means (35 or 74-76) separably joining the two non-linked ends of the respective segments (31 or 71A,D) and being adjustable to vary the effective diameter of the clamping device, and

 (b) said coupling means (50, 60) comprise a generally ring-shaped, articulated second clamping device (60) composed of arcuate segments (81) pivotally linked together at adjacent ends thereof except at two, and connecting means (84-86) separably joining the two non-linked ends of the respective arcuate segments (81A, 81D) and being adjustable to vary the effective diameter of the second clamping device (60), and force transmitting means (50) affixed to said conduit seal (42), said arcuate segments (81) of the second clamping device (60) extending partially between said force transmitting means (50) and said opposite end of said one tubular flange (11) and having bearing surfaces (61, 62) which coact with complementary bearing surfaces (45, 52) formed on said one tubular flange (11) and on said force transmitting means (50), respectively, said bearing surfaces (61, 62) and complementary bearing surfaces (45, 52) being shaped such as to produce therebetween a wedge action placing said conduit seal (42) and said one tubular flange (11) axially in tension with respect to each other and thereby producing sealing pressure at said seating surfaces.

2. An instrumentation port interface assembly according to claim 1, characterized in that said connecting means (35) of the first clamping device (30) is a cap screw freely extending through an opening formed through an end portion (31F) of one of the arcuate segments (31) having the non-linked ends, and threadedly engaged in an opening formed in an end portion (31F) of the other arcuate segment (31) having one of the non-linked ends.

3. An instrumentation port interface assembly according to claim 1, characterized in that said connecting means (74-76) of the first clamping device (70) and said connecting means (84-86) of the second clamping device (60) each comprises a bolt (74 or 84) which is pivotally connected to one (71A or 81A) of the two arcuate segments (71A, 71D or 81A, 81D) having the non-linked ends, and is movable into and from a recess formed in an end portion adjacent the non-linked end of the other (71D or 81D) of said two arcuate segments, said connecting means (74-76 or 84-86) each including a nut (76 or 86A) which is threadedly engaged with said bolt (74 or 84) and acts upon said end portion of the arcuate segment having said recess formed therein.

4. An instrumentation port interface assembly according to claim 2 or 3, characterized in that the arcuate segments (31) with the non-linked ends have datum surfaces (31D) formed thereon adjacent the respective non-linked ends and cooperable with each other so as to limit the maximum decrease in said effective diameter achievable through adjustment of the connecting means (35), and thereby to limit the maximum radial inward pressure exertable by the respective clamping device.

5. An instrumentation port interface assembly according to any one of the preceding claims, characterized in that each of the arcuate segments (71) of at least said first clamping device (70) has radially out-turned portions adjacent the opposite ends thereof, said arcuate segments (71) being pivotally linked together by means of links (73) extending between and pivotally connected to the out-turned portions of the respective arcuate segments.

6. An instrumentation port interface assembly according to any one of the preceding claims, characterized in that said force transmitting means (50) comprise an annular member extending around said conduit seal (42) and affixed thereto.

7. An instrumentation port interface assembly according to claim 6, characterized in that said conduit seal (42) has a groove (43) circumferentially formed in the outer periphery thereof, said annular member (50) having a flange portion (51) directed radially inward and engaged in said annular groove (43).

8. An instrumentation port interface assembly according to claim 6 or 7, characterized in that said annular member (50) is a third clamping device composed of at least two arcuate segments pivotally linked together except at two adjacent ends which are non-linked, said third clamping device including connecting means for separably joining the arcuate segments at said non-linked ends thereof.

9. An instrumentation port interface assembly according to any one of the preceding claims, characterized in that each of said first and second clamping devices (70, 60) is composed of four said arcuate segments each having a span of less than 90°.

**Revendications**

1. Système de jonction d'orifice d'instrumentation comprenant une paire de brides tubulaires (10, 11) jointes l'une à l'autre au niveau d'une de leurs extrémités de façon à former entre elles une jonction étanche, un premier dispositif de serrage (30 ou 70) de forme globalement annulaire pour fixer les brides tubulaires l'une à l'autre d'une manière séparable et maintenir entre elles une pression d'étanchéité, ledit premier dispositif de serrage ayant des surfaces portantes inclinées l'une par rapport à l'autre qui coopèrent avec des surfaces portantes inclinées complémentaires (39, 40) présentes sur les brides tubulaires respectives (10, 11) de façon à transformer la pression exercée radialement vers l'intérieur par ledit premier dispositif de serrage en forces axiales de serrage et d'étanchéité exercées sur les brides tubulaires, un joint d'étanchéité (42) de conduit d'instrumentation ayant une partie formant extrémité insérée dans une première (11) desdites brides tubulaires à l'extrémité opposée de celle-ci et formant entre eux une jonction étanche, ledit joint d'étanchéité du conduit ayant sur la partie formant extrémité insérée une surface latérale d'appui en regard d'une surface latérale d'appui creusée formée sur ladite première bride tubulaire, à l'intérieur de celle-ci, un joint (12) étant intercalé entre celles-ci, et des moyens d'accouplement (50, 60) pour unir d'une façon séparable le joint d'étanchéité du conduit et ladite première bride tubulaire et pour maintenir une pression d'étanchéité entre ceux-ci, caractérisé en ce que:

(a) ledit premier dispositif de serrage (30 ou 70) est un collier articulé composé de segments arqués (31, 32; ou 71) pourvus desdites surfaces portantes (36, 37 ou 72A, 72B) et articulés les uns avec les autres aux extrémités contiguës de ceux-ci sauf à deux extrémités, et un moyen de raccordement (35 ou 74 à 76) unissant d'une manière séparable les deux extrémités non articulées des segments correspondants (31 ou 71A, D) et étant réglable pour modifier le diamètre effectif du dispositif de serrage, et

(b) lesdits moyens d'accouplement (50, 60) comportent un second dispositif de serrage articulé (60), de forme globalement annulaire, composé de segments arqués (81) articulés les uns avec les autres aux extrémités contiguës de ceux-ci sauf à deux extrémités, et un moyen de raccordement (84 à 86) réunissant d'une manière séparable les deux extrémités non articulées des segments arqués correspondants (81A, 81D) et étant réglable pour modifier le diamètre effectif du second dispositif de serrage (60), et un moyen (50) de transmission de force attaché audit joint d'étanchéité (42) du conduit, lesdits segments arqués (81) du second dispositif de serrage (60) s'étendant partiellement entre ledit moyen (50) de transmission de force et ladite extrémité opposée de ladite première bride tubulaire (11) et ayant des surfaces portantes (61, 62) qui coopèrent avec des surfaces portantes complémentaires (45, 52) formées respectivement sur ladite première bride tubulaire (11) et sur ledit moyen (50) de transmission de force, lesdites surfaces portantes (61, 62) et les surfaces portantes complémentaires (45, 52) ayant une forme conçue pour produire entre elles une action de coincement mettant ledit joint d'étanchéité (42) du conduit et ladite première bride tubulaire (11) en traction axiale l'un par rapport à l'autre et en produisant de ce fait une pression d'étanchéité au niveau desdites surfaces d'appui.

2. Système de jonction d'orifice d'instrumentation selon la revendication 1, caractérisé en ce que ledit moyen de raccordement (35) du premier dispositif de serrage (30) est une vis à chapeau s'étendant librement à travers une ouverture ménagée à travers une partie formant extrémité (31F) d'un des segments arqués (31) ayant une des extrémités non articulés, et vissée dans une ouverture formée dans une partie formant extrémité (31F) de l'autre segment arqué (31) ayant une des extrémités non articulées.

3. Système de jonction d'orifice d'instrumentation selon la revendication 1, caractérisé en ce que ledit moyen de raccordement (74 à 76) du premier dispositif de serrage (70) et ledit moyen de raccordement (84 à 86) du second dispositif de serrage (60) comportent chacun un boulon (74 ou 84) articulé avec un (71A ou 81A) des deux segments arqués (71A, 71D ou 81A, 81D) ayant une des extrémités non articulées, et peut entrer dans et sortir d'un évidement ménagé dans une partie formant extrémité contiguë à l'extrémité non articulée de l'autre (71D ou 81D) desdits deux segments arqués, lesdits moyens de raccordement (74 à 76 ou 84 à 86) comportant chacun un écrou (76 ou 86A) qui est vissé sur ledit boulon (74 ou 84) et agit sur ladite partie formant extrémité du segment arqué dans laquelle est formé ledit évidement.

4. Système de jonction d'orifice d'instrumentation selon la revendication 2 ou 3, caractérisé en ce que les segments arqués (31) à extrémités non articulées ont des surfaces de repérage (31D) formées sur ceux-ci au voisinage immédiat des extrémités non articulées respectives et pouvant coopérer les unes avec les autres de façon à limiter la diminution maximale dudit diamètre effectif pouvant être obtenu par réglage du moyen de raccordement (35) et à limiter de ce fait la pression maximale pouvant être exercée radialement vers l'intérieur par le dispositif de serrage correspondant.

5. Système de jonction d'orifice d'instrumentation selon l'une quelconque des revendications précédentes, caractérisé en ce que chacun des segments arqués (71) d'au moins ledit premier dispositif de serrage (70) a des parties tournées radialement vers l'extérieur au voisinage immédiat des extrémités opposées de ceux-ci, lesdits segments arqués (71) étant reliés l'un à l'autre d'une manière articulée à l'aide de pièces de liaison (73) s'étendant d'une manière articulée entre les parties des segments arqués correspondants tournées vers l'extérieur.

6. Système de jonction d'orifice d'instrumentation selon l'une quelconque des revendications précédentes, caractérisé en ce que ledit moyen (50) de transmission de force comprend un élément annulaire s'étendant autour dudit joint d'étanchéité (42) du conduit et attaché à celui-ci.

7. Système de jonction d'orifice d'instrumentation selon la revendication 6, caractérisé en ce que ledit joint d'étanchéité (42) du conduit a une gorge circonférentielle (43) formée sur son pourtour extérieur, ledit élément annulaire (50) ayant une partie formant rebord (51) orientée radialement vers l'intérieur et engagée dans ladite gorge annulaire (43).

8. Système de jonction d'orifice d'instrumentation selon la revendication 6 ou 7, caractérisé en ce que ledit élément annulaire (50) est un troisième dispositif de serrage composé d'au moins deux segments arqués reliés d'une manière articulée l'un à l'autre, sauf à deux extrémités contiguës qui ne sont pas articulées, ledit troisième dispositif de serrage comportant un moyen de raccordement pour réunir d'une manière séparable les segments arqués au niveau desdites extrémités non articulées de ceux-ci.

9. Système de jonction d'orifice d'instrumentation selon l'une quelconque des revendications précédentes, caractérise en ce que chacun desdits premier et second dispositifs de serrage (70, 60) est composé de quatre segments arqués précités ayant chacun une envergure inférieure à 90°.

**Patentansprüche**

1. Instrumentierungsöffnung-Anschlußvorrichtung mit zwei Rohrflanschen (10, 11), die jeweils an einem Ende miteinander unter Herstellung einer abgedichteten Verbindung gekuppelt sind, mit einer etwa ringartigen ersten Klemmvorrichtung (30 bzw. 70) zum trennbaren Verbinden der beiden Rohrflansche miteinander und zum Aufrechterhalten einer Dichtkraft zwischen ihnen, wobei diese erste Klemmvorrichtung relativ zueinander geneigte Anlageflächen aufweist, die mit komplementär geneigten Anlageflächen (39, 40) an den betreffenden Rohrflanschen (10, 11) zusammenwirken, um einen über die erste Klemmvorrichtung erzeugten, radial einwärts gerichteten Preßdruck in auf die Rohrflanschen wirkende axial Klemm- und Dichtkräfte umzusetzen, weiter mit einem Instrumentierungskanalverschluß (42) mit einem einem oberen Endteil, der in einen (11) der Rohrflansche an dessen anderem Ende eingesetzt ist und mit diesem eine abgedichtete Verbindung bildet, wobei der Kanalverschluß an seinem eingesetzten Endteil eine seitliche Sitzfläche aufweist, die einer an dem genannten einen Rohrflansch gebildeten hinterschnittenen seitlichen Sitzfläche unter Zwischenlage einer Dichtung (12) zugewandt ist, und mit Kupplungsmitteln (50, 60) zum trennbaren Verbinden des Kanalverschlusses und des genannten einen Rohrflansches und zum Aufrechterhalten einer Dichtkraft zwischen diesen, dadurch gekennzeichnet, daß

a) die genannte erste Klemmvorrichtung (30 bzw. 70) eine aus bogenförmigen Segmenten (31, 32; bzw. 71) zusammengesetzte Gelenkklemmschelle ist, deren Segemente mit den genannten Anlageflächen (36, 37 bzw. 72A, 72B) versehen und mit Ausnahme von zwei Enden mit ihren benachbarten Enden gelenkig miteinander verbunden sind, und welche die beiden nicht verbundenen Enden der betreffenden Segmente (31 bzw, 71A, D) lösbar verbindende Verbindungsmittel (35 bzw. 74-76) aufweist, die zur Veränderung des wirksamen Durchmessers der Klemmvorrichtung verstellbar sind, und

b) die genannten Kupplungsmittel (50, 60) eine etwa ringförmige, gelenkige zweite Klemmvorrichtung (60) umfassen, die aus bogenförmigen Segmenten (81) zusammengesetzt ist, die mit Ausnahme von zwei Enden an benachbarten Enden gelenkig miteinander verbunden sind, und weiche die beiden nicht verbundenen Enden der betreffenden bogenförmigen Segmente (81A, 82D) trennbar verbindende Verbindungsmittel (84-86) aufweist, die zur Veränderung des wirksamen Durchmessers der zweiten Klemmvorrichtung (60) verstellbar sind, und außerdem ein an dem Kanalverschluß (42) befestigtes Kraftübertragungsorgan (50) aufweist, wobei die bogenförmigen Segmente (81) der zweiten Klemmvorrichtung (60) teilweise zwischen das Kraftübertragungsorgan (50) und das genannte andere Ende des einen Rohrflansches (11) hineinragen und Anlageflächen (61, 62) aufweisen, die mit komplementären Anlageflächen (45, 52) an dem einen Rohrflansch (11) und an dem Kraftübertragungsorgan (50) zusammenwirken, wobei die Anlageflächen (61, 62) und die komplementären Anlageflächen (45, 52) so geformt sind, daß sie eine Keilwirkung erzeugen, welche den Kanalverschluß (42) und den genannten einen Rohrflansch (11) axial unter Zugspannung mit Bezug zueinander setzen und dadurch die Dichtkraft an den genannten Sitzflächen erzeugen.

2. Instrumentierungsöffnung-Anschlußvorrichtung nach Anspruch 1, dadurch gekennzeichnet, daß die Verbindungsmittel (35) der ersten Klemmvorrichtung (30) eine Kopfschraube aufweisen, die frei durch eine in einem Endteil (31F) eines der bogenförmigen Segmente (31) mit den nicht verbundenen Enden hindurchverläuft und in eine Gewindebohrung in einem Endteil (31F) des anderen bogenförmigen Segments (31) mit einem der nicht verbundenen Enden eingeschraubt ist.

3. Instrumentierungsöffnung-Anschlußvorrichtung nach Anspruch 1, dadurch gekennzeichnet, daß die Verbindungsmittel (74-76) der ersten Klemmvorrichtung (70) und die Verbindungsmittel (84-86) der zweiten Klemmvorrichtung (60) jeweils eine Schraube (74 bzw. 84) aufweisen, die gelenkig mit einem (71A bzw. 81A) der beiden bogenförmigen Segmente (71A, 71D bzw. 81A, 81D) mit den nicht verbundenen Enden verbunden ist und in eine und aus einer Aussparung bewegbar ist, die in einem Endteil des nicht verbundenen Endes des anderen (71D bzw. 81D) der beiden bogenförmigen Segmente gebildet ist, und daß die Verbindungsmittel (74-76 bzw. 84-86) jeweils eine Mutter (76 bzw. 86A) aufweisen, die auf die Schraube (74 bzw. 84) aufgeschraubt ist und an dem genannten Endteil des bogenförmigen Segments mit der darin gebildeten Aussparung angreift.

4. Instrumentierungsöffnung-Anschlußvorrichtung nach Anspruch 2 oder 3, dadurch gekennzeichnet, daß die bogenförmigen Segmente (31) mit den nicht verbundenen Enden Bezugflächen (31D aufweisen, die an deren nicht verbundenen Enden gebildet sind und so miteinander zusammenwirken, daß sie die durch Verstellung der Verbindungsmittel (35) erreichbare maximale Verringerung des wirksamen Durchmessers und dadurch den durch die betreffende Klemmvorrichtung erzeugbaren maximalen radialen Einwärtsdruck begrenzen.

5. Instrumentierungsöffnung-Anschlußvorrichtung nach einem der vorhergehenden Ansprüche, dadurch gekennzeichnet, daß jedes der bogenförmigen Segmente (71) mindestens der ersten Klemmvorrichtung (70) an seinen entgegengesetzten Enden radial auswärts gebogene Teile aufweist, die mittels dazwischen verlaufenden und gelenkig an den auswärts gebogenen Teilen der betreffenden bogenförmigen Segmente angeschlossenen Verbindungsgliedern (73) gelenkig miteinander verbunden sind.

6. Instrumentierungsöffnung-Anschlußvorrichtung nach einem der vorhergehenden Ansprüche, dadurch gekennzeichnet, daß das Kraftübertragungsorgan (50) ein um den Kanalverschluß (42) herum verlaufendes und daran befestigtes ringförmiges Bauteil ist.

7. Instrumentierungsöffnung-Anschlußvorrichtung nach Anspruch 6, dadurch gekennzeichnet, daß der Kanalverschluß (42) eine in seinem Außenumfang gebildete Umfangsnut (43) aufweist und das ringförmige Bauteil (50) einen radial einwärts verlaufenden und in die genannte Ringnut (43) eingreifenden Flanschteil (51) aufweist.

8. Instrumentierungsöffnung-Anschlußvorrichtung nach Anspruch 6 oder 7, dadurch gekennzeichnet, daß das ringförmige Bauteil (50) eine dritte Klemmvorrichtung ist, das aus mindestens zwei bogenförmigen Segmenten besteht, die ausgenommen an zwei nicht verbundenen Enden gelenkig miteinander verbunden sind, und daß diese dritte Klemmvorrichtung Verbindungsmittel zum lösbaren Verbinden der bogenförmigen Segmente an deren nicht verbundenen Enden aufweist.

9. Instrumentierungsöffnung-Anschlußvorrichtung nach einem der vorhergehenden Ansprüche, dadurch gekennzeichnet, daß die erste und zweite Klemmvorrichtung (70, 60) jeweils aus vier bogenförmigen Segmenten zusammengesetzt ist, die jeweils einen Bogen von weniger als 90° umspannen.

FIG. 1.

FIG. 2.

FIG. 3.

FIG. 4.

14

FIG. 5.

73

71B                                             71A

6b.                                             6b.

74

73                                              75

71C                                    71D      76

70

**FIG. 6**a.

70

78      71B      78        73      78      71A      78

73                                              74

72A

72B

79      73A      79          79          79

**FIG. 6**b.

FIG. 7a.

FIG. 7b.